# EUROPÄISCHE PATENTSCHRIFT

(11) **EP 3 568 732 B1**
(45) Veröffentlichungstag und Bekanntmachung des Hinweises auf die Patenterteilung: **17.02.2021**
(21) Anmeldenummer: 17823059.5
(22) Anmeldetag: 11.12.2017
(51) Int. Cl.: G05D 1/00

(54) **VERFAHREN ZUM BETREIBEN EINES SICHERHEITSSYSTEMS FÜR EIN KRAFTFAHRZEUG UND SICHERHEITSSYSTEM**
METHOD FOR OPERATING A SAFETY SYSTEM FOR A MOTOR VEHICLE AND SAFETY SYSTEM
PROCÉDÉ D'ACTIONNEMENT D'UN SYSTÈME DE SÉCURITÉ POUR UN VÉHICULE AUTOMOBILE ET SYSTÈME DE SÉCURITÉ

(30) Priorität: 12.01.2017 DE 102017200432
(43) Veröffentlichungstag der Anmeldung: 20.11.2019
(73) Patentinhaber: AUDI AG, 85045 Ingolstadt (DE)
(72) Erfinder: BADOUIN, David Alexander, 85049 Ingolstadt (DE); KREHER, Kai Uwe, 85051 Ingolstadt (DE)
(86) Internationale Anmeldenummer: PCT/EP2017/082220
(87) Internationale Veröffentlichungsnummer: WO 2018/130354

(56) Entgegenhaltungen:
- WO-A1-00/46068
- DE-A1-102009 029 720
- DE-A1-102014 221 771

## Beschreibung

Die Erfindung betrifft ein Verfahren zum Betreiben eines Sicherheitssystems für ein Kraftfahrzeug zum Überfahren einer Systemgrenze. Schließlich betrifft die Erfindung auch ein Sicherheitssystem für ein Kraftfahrzeug sowie ein Verfahren zum Betreiben einer Servereinrichtung eines Sicherheitssystems.

Die Verwendung von fahrerlosen oder autonomen Fahrfunktionen wird in der frühen Entwicklungsphase autonom oder fahrerlos gesteuerter Kraftfahrzeuge vor allem an bestimmte Umgebungen gebunden sein, beispielsweise an Parkhäuser, in denen das Kraftfahrzeug automatisch oder fahrerlos einparkt. Die Bindung an bestimmte Umgebungen liegt daran, dass die Sicherheit autonom oder fahrerlos gesteuerter Kraftfahrzeuge nur in Kombination mit bestimmten Rahmenbedingungen gegeben ist. Würde das autonom oder fahrerlos gesteuerte Kraftfahrzeug in den öffentlichen Straßenverkehr eintreten, wäre es außerhalb der bestimmten Umgebung, wie beispielsweise dem Parkhaus, eine Gefährdung für den Straßenverkehr.

Damit sich das Kraftfahrzeug auch sicher autonom bewegen kann, sind aus dem Stand der Technik unterschiedliche Ansätze bekannt.

So beschreibt beispielsweise die DE 10 2013 008 605 A1 ein Verfahren zum Betreiben eines Navigationssystems für ein Kraftfahrzeug mit Autopiloten. Dabei ist der Autopilot dazu ausgelegt, im aktivierten Zustand während einer pilotierten Fahrt ohne ein Zutun eines Fahrers selbsttätig eine Längs- und Querführung des Kraftfahrzeugs durchzuführen. Bei dem Verfahren wird durch das Navigationssystem eine Fahrroute zu einer Zielvorgabe des Fahrers auf der Grundlage von Navigationsdaten ermittelt. Anhand von Verkehrsdaten und auf Grundlage einer vorbestimmten Aktivierungsbedingung für den Autopiloten wird ermittelt, auf welchen Straßen das Aktivieren des Autopiloten voraussichtlich möglich ist.

In der US 9 188 985 B1 ist ein Verfahren zur Erzeugung von Routenoptionen für ein autonomes Fahrzeug beschrieben. Die Routenoptionen basieren auf Navigationsbedingungen, wie beispielsweise einer Gesamtfahrzeit, einer Fahrstrecke oder eines Kraftstoffverbrauchs. Die Routenoptionen können ferner auch Informationen über Streckenabschnitte beinhalten, auf denen das Kraftfahrzeug autonom, teilautonom oder nur durch einen Fahrer gesteuert werden kann.

Derartige Verfahren geben Vorschläge oder Hinweise aus, in denen es während einer Fahrt des Kraftfahrzeugs für einen Fahrer sicher sein kann, das Kraftfahrzeug durch einen Autopiloten steuern zu lassen. Sobald sich aber der Fahrer entscheidet in den pilotierten Fahrbetrieb zu schalten, bleibt der pilotierte Fahrbetrieb eingeschaltet. Kommt es zu einer Gefahrensituation während der Fahrt, ist nicht sichergestellt, dass der Fahrbetrieb des Kraftfahrzeugs den pilotierten Fahrbetrieb, also autonomen Fahrbetrieb, deaktiviert, sodass der Fahrer wieder die Kontrolle über sein Kraftfahrzeug zurück erlangen kann. Damit stellt das Kraftfahrzeug im autonomen Fahrbetrieb eine Gefahr für den Straßenverkehr und für Verkehrsteilnehmer dar.

Aus der DE 10 2014 221 771 A1 geht ein Verfahren zum Betreiben eines Parkplatzes hervor. Bei dem Verfahren wird eine Route zu einer Zielposition innerhalb des Parkplatzes für eine autonome Fahrt eines Fahrzeugs auf dem Parkplatz zu der Zielposition ermittelt. Anschließend wird zumindest ein Teilstück der Route für weitere Fahrzeuge gesperrt, bevor das Fahrzeug das Teilstück durchfährt, sodass das Fahrzeug autonom durch das gesperrte Teilstück der Route fahren kann. Der Nachteil eines solchen Verfahrens besteht darin, dass durch das Sperren von Teilstücken der Route andere Kraftfahrzeuge oder Verkehrsteilnehmer behindert werden. Zudem ist der Steuerungsaufwand zum Sperren entsprechender Teilstücke, je nachdem wann und wo das Kraftfahrzeug autonom einparken soll, besonders aufwändig.

Aufgabe der vorliegenden Erfindung ist es daher, ein Verfahren zum Betreiben eines Sicherheitssystems für ein Kraftfahrzeug bereitzustellen, welches besonders einfach betreibbar ist und, wenn sich das Kraftfahrzeug in einem autonomen Fahrmodus befindet, rechtzeitig sicherzustellen, dass dieses weitere Verkehrsteilnehmer weder behindert noch in Gefahr bringt.

Diese Aufgabe wird durch ein Verfahren zum Betreiben eines Sicherheitssystems für ein Kraftfahrzeug, durch ein Verfahren zum Betreiben einer Servereinrichtung sowie durch ein zugehöriges Sicherheitssystem mit den Merkmalen der unabhängigen Patentansprüche gelöst. Vorteilhafte Ausgestaltungen mit zweckmäßigen und nicht trivialen Weiterbildungen der Erfindung sind in den abhängigen Patentansprüchen angegeben.

Bei dem Verfahren zum Betreiben eines Sicherheitssystems für ein Kraftfahrzeug zum Überfahren einer Systemgrenze bewegt sich das Kraftfahrzeug innerhalb eines vorbestimmten Gebiets, welches durch die Systemgrenze festgelegt ist, in einem autonomen Fahrbetrieb autonom von einer Abgabestelle zu einer vorbestimmten Position und anschließend von der vorbestimmten Position zurück zu der Abgabestelle. Mit autonomen Fahrbetrieb ist hier bevorzugt gemeint, dass sich das Kraftfahrzeug selbstständig, also vollautomatisch, bewegt. Im autonomen Fahrbetrieb kann es vorgesehen sein, dass sich keiner im Kraftfahrzeug oder kein aktiver Fahrzeugführer oder nur Passagiere im Kraftfahrzeug befinden. Mit "Systemgrenze" ist im Sinne der vorliegenden Erfindung bevorzugt eine geographische Grenze gemeint, welche das vorbestimmte Gebiet oder einen vorbestimmten Bereich eingegrenzt. Entsprechend ist mit dem "vorbestimmten Gebiet" bevorzugt ein geographischer Bereich gemeint. Beispielsweise kann sich bei dem vorbestimmten Gebiet um ein Parkhaus oder einen Parkplatz handeln. Die Ein- und Ausfahrten des Parkhauses oder des Parkplatzes können beispielsweise die Systemgrenze bilden oder darstellen.

Zum Überfahren der Systemgrenze wird zunächst eine mechanische Absperreinrichtung des Sicherheitssystems mittels einer Erfassungseinrichtung des Kraftfahrzeugs erfasst. Die mechanische Absperreinrichtung bildet einen Teil der Systemgrenze. Handelt es sich bei dem vorbestimmten Gebiet beispielsweise um das Parkhaus, so kann die mechanische Absperreinrichtung beispielsweise als Schranke oder Tor des Parkhauses oder Parkplatzes als Teil der Einfahrt und/oder Ausfahrt des Parkhauses oder des Parkplatzes ausgebildet sein. Die mechanische Absperreinrichtung kann also eine Schranke und/oder ein Tor umfassen. Die Erfassungseinrichtung des Kraftfahrzeugs kann beispielsweise einen Laser und/oder eine Kamera und/oder ein Radar und/oder einen Ultraschallsensor und/oder ein Lidar zum Erfassen der mechanischen Absperreinrichtung umfassen. Die Schranke des Parkhauses oder Parkplatzes kann bevorzugt durch das Kraftfahrzeug, also die Erfassungseinrichtung des Kraftfahrzeugs, sensorisch erfasst oder erkannt werden.

In einem weiteren Verfahrensschritt, insbesondere nach dem Erfassen der mechanischen Absperreinrichtung, wird ein aktueller Fahrbetrieb des Kraftfahrzeugs erfasst. Mit "Fahrbetrieb" ist im Sinne der Erfindung bevorzugt ein autonomer oder nicht-autonomer Fahrbetrieb des Kraftfahrzeugs gemeint. Mit "nicht-autonomer Fahrbetrieb" ist bevorzugt eine durch einen Fahrer des Kraftfahrzeugs gesteuerte Fahrt des Kraftfahrzeugs gemeint.

Anschließend wird eine Fahrbetriebsmeldung durch eine Kommunikationseinrichtung des Kraftfahrzeugs zum Öffnen der mechanischen Absperreinrichtung ausgeben. Schließlich wird in einem weiteren Verfahrensschritt die mechanische Absperreinrichtung geöffnet, wenn sich gemäß der Fahrbetriebsmeldung das Kraftfahrzeug in einem nicht-autonomen Fahrbetrieb befindet. Die Fahrbetriebsmeldung weist bevorzugt eine Information über den aktuellen Fahrbetrieb des Kraftfahrzeugs auf. Bevorzugt wird die mechanische Absperreinrichtung zum Überfahren der Systemgrenze geöffnet, wenn ein nicht-autonomer Fahrbetrieb des Kraftfahrzeugs erfasst wird. Die mechanische Absperreinrichtung wird bevorzugt nicht geöffnet, also bleibt geschlossen, wenn ein autonomer Fahrbetrieb des Kraftfahrzeugs erfasst wird.

Die mechanische Absperreinrichtung verhindert im autonomen Fahrbetrieb des Kraftfahrzeugs insbesondere eine Weiterfahrt des Kraftfahrzeugs über die Systemgrenze. Dadurch kann sichergestellt werden, dass das Kraftfahrzeug im autonomen Fahrbetrieb nicht in den öffentlichen Straßenverkehr eintritt. Dadurch kann zudem auf besonders einfache und zuverlässige Art und Weise sichergestellt werden, dass sich das im autonomen Fahrbetrieb befindende Kraftfahrzeug keine Gefahr für den Straßenverkehr oder Verkehrsteilnehmer darstellt.

Eine Ausführungsform sieht vor, dass bei oder nach Erfassen der mechanischen Absperreinrichtung das Kraftfahrzeug zum Stillstand gebracht wird. Sobald also durch die Erfassungseinrichtung des Kraftfahrzeugs die mechanische Absperreinrichtung erkannt wird, kann das Kraftfahrzeug abgebremst werden und stehen bleiben. Dazu kann die Erfassungseinrichtung bei oder nach dem Erfassen der mechanischen Absperreinrichtung ein Stoppsignal an eine Steuereinrichtung des Kraftfahrzeugs übermitteln oder ausgeben.

Daraufhin kann die Steuereinrichtung des Kraftfahrzeugs dazu eingerichtet sein, das Kraftfahrzeug in den Stillstand zu bringen. Dadurch ergibt sich der Vorteil, dass das Kraftfahrzeug, auch wenn es sich im autonomen Fahrbetrieb befindet, die Systemgrenze nicht überschreitet.

Gemäß einer vorteilhaften Weiterbildung wird vor dem Erfassen des Fahrbetriebs des Kraftfahrzeugs das Kraftfahrzeug von dem autonomen Fahrbetrieb in den nicht-autonomen Fahrbetrieb überführt, wobei zum Erfassen des Fahrbetriebs bei Überführung des Fahrbetriebs des Kraftfahrzeugs in den nicht-autonomen Fahrbetrieb die Fahrbetriebsmeldung von dem Kraftfahrzeug, insbesondere an eine Servereinrichtung, ausgegeben wird. Beispielsweise kann eine Steuereinrichtung des Kraftfahrzeugs dazu eingerichtet sein, den aktuellen Fahrbetrieb des Kraftfahrzeugs zu erfassen. Die Steuereinrichtung kann ferner dazu eingerichtet sein, den aktuellen Fahrbetrieb des Kraftfahrzeugs an die Kommunikationseinrichtung zu kommunizieren oder der Kommunikationseinrichtung zu übermitteln. Die Kommunikationseinrichtung des Kraftfahrzeugs kann dazu eingerichtet sein, den aktuellen Fahrbetrieb des Kraftfahrzeugs zu erfassen oder zu empfangen und den aktuellen Fahrbetrieb durch die Fahrbetriebsmeldung an die Servereinrichtung des Sicherheitssystems zu übermitteln. Die Fahrbetriebsmeldung umfasst insbesondere Informationen über den Fahrbetrieb des Kraftfahrzeugs. Dabei kann die Kommunikationseinrichtung oder die Steuereinrichtung des Kraftfahrzeugs dazu eingerichtet sein, kontinuierlich oder in vorbestimmten zeitlichen Abständen die Fahrbetriebsmeldung von dem Kraftfahrzeug an die Servereinrichtung auszugeben. Bevorzugt ist die Servereinrichtung bei Empfangen der Fahrbetriebsmeldung dazu eingerichtet, die Fahrbetriebsmeldung auszuwerten. Erst wenn die Servereinrichtung erfasst, dass sich das Kraftfahrzeug in einem nicht-autonomen Fahrbetrieb befindet, kann die mechanische Absperreinrichtung durch die Servereinrichtung angesteuert werden. Durch die Erfassung des Fahrbetriebs des Kraftfahrzeugs wird das Sicherheitssystem regelmäßig über den Fahrbetrieb des Kraftfahrzeugs informiert.

In vorteilhafter Weise wird vor dem Öffnen der mechanischen Absperreinrichtung eine erste Sicherheitsbedingung und/oder eine zweite Sicherheitsbedingung durch das Sicherheitssystem geprüft, wobei erst bei Erfüllen der ersten Sicherheitsbedingung und/oder der zweiten Sicherheitsbedingung die mechanische Absperreinrichtung geöffnet wird. Bevorzugt kann die Servereinrichtung dazu eingerichtet sein, die erste Sicherheitsbedingung und/oder die zweite Sicherheitsbedingung zu überprüfen. Zum Öffnen der mechanischen Absperreinrichtung, insbesondere nach Überprüfung der ersten Sicherheitsbedingung und/oder der zweiten Sicherheitsbedingung, kann die mechanische Absperreinrichtung eine Freigabemeldung oder ein Freigabesignal empfangen. Beispielsweise kann die Servereinrichtung die Freigabemeldung, insbesondere an die mechanische Absperreinrichtung, ausgeben. Sobald oder wenn die mechanische Absperreinrichtung die Freigabemeldung empfängt, kann die mechanische Absperreinrichtung geöffnet werden. Durch die erste Sicherheitsbedingung und/oder die zweite Sicherheitsbedingung ergibt sich ein mehrstufiges Sicherheitsverfahren zum Öffnen der mechanischen Absperreinrichtung.

Eine Weiterbildung sieht vor, dass als erste Sicherheitsbedingung ein Fahrbereitschaftszustand des Kraftfahrzeugs erfasst wird. Dabei kann der Fahrbereitschaftszustand durch das Öffnen zumindest einer Tür des Kraftfahrzeugs signalisiert werden. Beispielsweise kann als die zumindest eine Tür die Fahrertür des Kraftfahrzeugs und/oder die Beifahrertür des Kraftfahrzeugs und/oder eine Hintertür des Kraftfahrzeugs und/oder eine Heckklappe des Kraftfahrzeugs geöffnet werden. Bevorzugt kann die Steuereinrichtung des Kraftfahrzeugs dazu eingerichtet sein, das Öffnen der zumindest einen Tür des Kraftfahrzeugs zu erfassen. Zusätzlich oder alternativ kann der Fahrbereitschaftszustand durch das Erfassen einer Annäherung eines Fahrers an das Kraftfahrzeug signalisiert werden. Eine Annäherung des Fahrers oder einer Person an das Kraftfahrzeug kann beispielsweise durch einen Näherungssensor und/oder eine Kamera am Kraftfahrzeug, welche auf eine Umgebung des Kraftfahrzeugs gerichtet ist, erfasst werden. Zusätzlich oder alternativ kann der Fahrbereitschaftszustand durch das Erfassen eines Funkschlüssels des Kraftfahrzeugs in einem Innenraum des Kraftfahrzeugs und/oder durch das Erfassen des Fahrers in dem Innenraum des Kraftfahrzeugs signalisiert werden. Beispielsweise kann der Fahrer und/oder der Funkschlüssel in dem Innenraum durch eine Kamera erfasst werden, welche insbesondere an einem Dachhimmel des Kraftfahrzeugs angeordnet ist. Sobald das Öffnen zumindest einer Tür und/oder eine Annäherung an das Kraftfahrzeug und/oder der Fahrer im Innenraum des Kraftfahrzeugs und/oder der Funkschlüssel im Innenraum des Kraftfahrzeugs erfasst wird, kann ein Signal an die Steuereinrichtung des Kraftfahrzeugs ausgegeben werden, welche daraufhin der Servereinrichtung den Fahrbereitschaftszustand übermittelt.

Zusätzlich oder alternativ kann es vorgesehen sein, dass das Kraftfahrzeug bei Erfüllen der ersten Sicherheitsbedingung von dem autonomen Fahrbetrieb in den nicht-autonomen Fahrbetrieb überführt wird. Mit anderen Worten kann sich das Kraftfahrzeug solange in dem autonomen Fahrbetrieb befinden, bis durch das Sicherheitssystem, insbesondere durch die Servereinrichtung, erfasst wird, dass die erste Sicherheitsbedingung erfüllt ist. Die erste Sicherheitsbedingung ist beispielsweise erfüllt, wenn als der Fahrbereitschaftszustand das Öffnen der zumindest einen Tür des Kraftfahrzeugs erfasst wird.

Bevorzugt wird als zweite Sicherheitsbedingung eine Bedienhandlung eines Nutzers, insbesondere eines Nutzers des Kraftfahrzeugs, an der mechanischen Absperreinrichtung erfasst. Dabei kann die Bedienhandlung durch eine Betätigung einer Taste an der mechanischen Absperreinrichtung signalisiert werden. Beispielsweise kann der Nutzer als Taste einen Druckknopf an der mechanischen Absperreinrichtung betätigen. Zusätzlich oder alternativ kann die Bedienhandlung durch ein Einführen eines Freigabeelements in die mechanische Absperreinrichtung signalisiert werden. Zusätzlich oder alternativ kann die Bedienhandlung durch ein Eingeben eines Codes, insbesondere über eine Schnittstelle im Kraftfahrzeug, wie beispielsweise über ein HMI (englisch Human Machine Interface), signalisiert werden. Handelt es sich beispielsweise bei der mechanischen Absperreinrichtung um eine Schranke eines Parkhauses, so kann der Fahrer einen Parkschein als Freigabeelement der mechanischen Absperreinrichtung, insbesondere über eine Schnittstelle der mechanischen Absperreinrichtung, zuführen.

Durch die Sicherheitsbedingungen - erste Sicherheitsbedingung und/oder zweite Sicherheitsbedingung - kann das Sicherheitssystem besonders zuverlässig betrieben werden.

Zu der Erfindung gehört auch ein Verfahren zum Betreiben einer Servereinrichtung eines Sicherheitssystems zum Öffnen einer mechanischen Absperreinrichtung. Zunächst wird eine Fahrbetriebsmeldung oder ein Fahrbetriebssignal durch die Servereinrichtung empfangen, wobei die Fahrbetriebsmeldung einen aktuellen Fahrbetrieb des Kraftfahrzeugs meldet. Mit anderen Worten informiert die Fahrbetriebsmeldung die Servereinrichtung über den aktuellen Fahrbetrieb des Kraftfahrzeugs. Anschließend wird die Fahrbetriebsmeldung durch die Servereinrichtung ausgewertet. Schließlich wird durch die Servereinrichtung eine Freigabemeldung oder ein Freigabesignal zum Öffnen der mechanischen Absperreinrichtung ausgegeben, wenn nach dem Auswerten der Fahrbetriebsmeldung durch die Servereinrichtung ein nicht-autonomer Fahrbetrieb des Kraftfahrzeugs erfasst wird. Bevorzugt wird der aktuelle Fahrbetrieb des Kraftfahrzeugs gemäß der Fahrbetriebsmeldung durch die Servereinrichtung erfasst.

Zu der Erfindung gehört auch ein Sicherheitssystem für ein Kraftfahrzeug zum Überfahren oder Passieren einer Systemgrenze. Dabei weist das Sicherheitssystem eine Erfassungseinrichtung zum Erfassen einer mechanischen Absperreinrichtung des Sicherheitssystems auf, wobei die Absperreinrichtung einen Teil der Systemgrenze eines vorbestimmten Gebiets, insbesondere des Sicherheitssystems, bildet. Bevorzugt ist die mechanische Absperreinrichtung Teil des Sicherheitssystems. Ferner umfasst das Sicherheitssystem eine Kommunikationseinrichtung, welche dazu eingerichtet ist, eine Fahrbetriebsmeldung zum Öffnen der mechanischen Absperreinrichtung auszugeben.

In vorteilhafter Weise umfasst das Sicherheitssystem eine Servereinrichtung, welche dazu eingerichtet ist, eines Fahrbetriebs des Kraftfahrzeugs zu erfassen und auszuwerten. Die Servereinrichtung kann ferner dazu eingerichtet sein, die mechanische Absperreinrichtung durch Ansteuern zu öffnen, wenn ein nicht-autonomer Fahrbetrieb des Kraftfahrzeugs erfasst wird.

Die für die erfindungsgemäßen Verfahren beschriebenen Vorteile und bevorzugten Ausführungsformen gelten auch für das erfindungsgemäße Sicherheitssystem und umgekehrt.

Zu der Erfindung gehören auch Weiterbildungen des erfindungsgemäßen Sicherheitssystems, die Merkmale aufweisen, wie sie bereits im Zusammenhang mit den Weiterbildungen der erfindungsgemäßen Verfahren beschrieben worden sind. Aus diesem Grund sind die entsprechenden Weiterbildungen des erfindungsgemäßen Sicherheitssystems hier nicht noch einmal beschrieben.

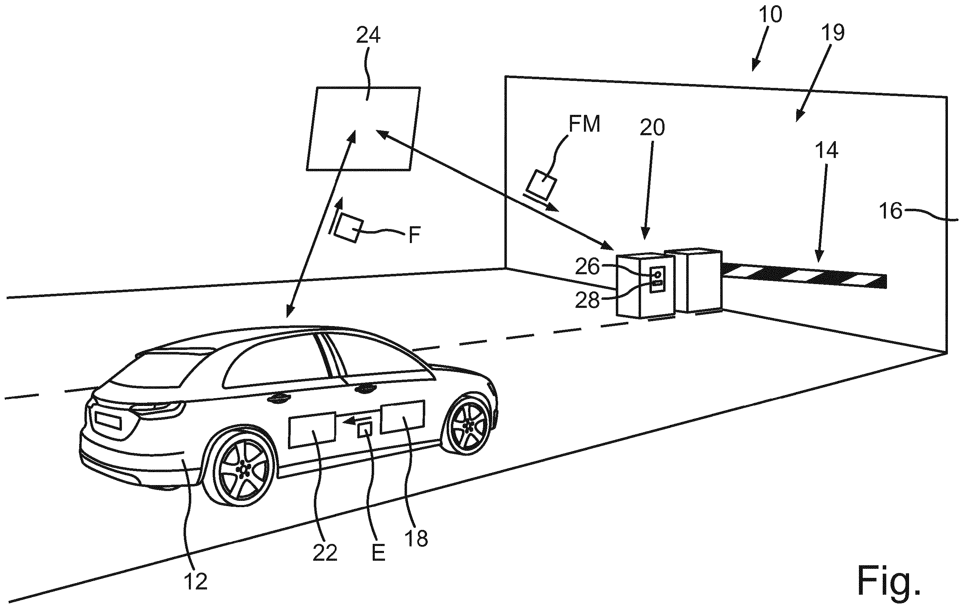

Im Folgenden ist ein Ausführungsbeispiel der Erfindung beschrieben. Hierzu zeigt die einzige Figur (Fig.) in einer schematischen Darstellung das Sicherheitssystem 10 für ein Kraftfahrzeug 12 zum Überfahren oder Passieren einer Systemgrenze 14. Bei dem Kraftfahrzeug 12 handelt es sich bevorzugt um einen Kraftwagen, insbesondere einen Personenkraftwagen.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebenen Ausführungsformen auch durch weitere der bereits beschriebenen Merkmale der Erfindung ergänzbar.

Das Kraftfahrzeug 12 befindet sich beispielsweise in einem Parkhaus 16. Ferner bewegt sich das Kraftfahrzeug 12 in dem Parkhaus 16 autonom oder vollautomatisch. Das Kraftfahrzeug 12 wurde von einem Fahrer oder Nutzer des Kraftfahrzeugs 12 an einer Abgabestelle abgestellt. An der Abgabestelle ist der Fahrer aus dem Kraftfahrzeug 12 ausgestiegen. Das Kraftfahrzeug 12 wurde durch den Fahrer an der Abgabestelle in den autonomen Fahrbetrieb überführt. Das Kraftfahrzeug 12 ist dazu eingerichtet, daraufhin von der Abgabestelle zu einer vorbestimmten Position zu fahren. Beispielsweise wurde das Kraftfahrzeug 12 durch den Fahrer an der Abgabestelle in dem Parkhaus 16 abgestellt. In dem autonomen Fahrbetrieb fährt das Kraftfahrzeug 12 anschließend von der Abgabestelle automatisch zu einer Parkposition und parkt dort ein. Anschließend kann das Kraftfahrzeug dazu eingerichtet sein, von der vorbestimmten Position zurück zu der Abgabestelle zu fahren. Bei der "Abgabestelle" handelt es sich bevorzugt um eine Position, in der der Fahrer des Kraftfahrzeugs 12 das Kraftfahrzeug 12 abgestellt und aus dem Kraftfahrzeug 12 ausgestiegen ist.

Damit sich das Kraftfahrzeug 12 automatisch von einer Abgabestelle zu der vorbestimmten Position und zurück zu der Abgabestelle bewegen kann, kommuniziert das Kraftfahrzeug 12 beispielsweise über eine Funkverbindung mit einer lokalen Infrastruktur insbesondere der lokalen Infrastruktur des Parkhauses 16. Die lokale Infrastruktur ist dazu eingerichtet, die Funktionsabläufe des Kraftfahrzeugs 12, also das Bewegen des Kraftfahrzeugs 12 von der Abgabestelle zu der vorbestimmten Position und wieder zurück zu der Abgabestelle zu koordinieren. In dem gezeigten Ausführungsbeispiel befindet sich das Kraftfahrzeug 12 wieder nach dem Verlassen der vorbestimmten Position an der Abgabestelle.

Solange sich das Kraftfahrzeug 12 von der vorbestimmten Position zu der Abgabestelle hin bewegt oder fährt, befindet sich das Kraftfahrzeug 12 in einem autonomen Fahrbetrieb. Das Parkhaus 16 bildet dabei ein vorbestimmtes Gebiet, welches durch die Systemgrenze 14 eingefasst ist. Innerhalb des vorbestimmten Gebiets, also innerhalb des Parkhauses 16, bewegt sich das Kraftfahrzeug 12 autonom. Damit das Kraftfahrzeug 12 aber im autonomen Fahrbetrieb nicht die Systemgrenze 14 überschreitet, sieht das Sicherheitssystem 10 mehrere Sicherheitsstufen vor. Das soll im Folgenden genauer erläutert werden.

Sobald sich das Kraftfahrzeug 12 einer Ausfahrt des Parkhauses 16 oder der Abgabestelle nähert und aus dem Parkhaus 16 hinausfahren möchte, wird mittels einer Erfassungseinrichtung 18 des Kraftfahrzeugs 12 oder des Sicherheitssystems 10 eine mechanische Absperreinrichtung 20 erfasst. Bevorzugt ist die Erfassungseinrichtung 18 am dem Kraftfahrzeug 12 angeordnet und auf eine Umgebung des Kraftfahrzeugs 12 gerichtet. Die Erfassungseinrichtung 18 des Kraftfahrzeugs 12 kann beispielsweise eine Kamera und/oder einen Ultraschallsensor aufweisen.

Die mechanische Absperreinrichtung 20 bildet einen Teil der Systemgrenze 14. Bei der mechanischen Absperreinrichtung 20 handelt es sich um eine Schranke des Parkhauses 16. Alternativ kann es sich bei der mechanischen Absperreinrichtung 20 auch beispielsweise um ein Tor handeln. Sobald die Erfassungseinrichtung 18 die mechanische Absperreinrichtung 20 erfasst, übermittelt die Erfassungseinrichtung 18 ein Erfassungssignal E an eine Steuereinrichtung 22 des Kraftfahrzeugs 12 oder des Sicherheitssystems 10. Die Steuereinrichtung 22 des Kraftfahrzeugs 12 kann daraufhin dazu eingerichtet sein, nach Empfangen des Erfassungssignals E das Kraftfahrzeug 12 abzubremsen und zum Stillstand, insbesondere in einem vorbestimmten Abstand zu der mechanischen Absperreinrichtung 20, zu bringen. In diesem Stadium befindet sich das Kraftfahrzeug 12 noch in einem autonomen Fahrbetrieb.

Anschließend wird durch eine Servereinrichtung 24 des Sicherheitssystems 10 ein Fahrbetrieb des Kraftfahrzeugs 12 erfasst. Dazu kann die Steuereinrichtung 22 des Kraftfahrzeugs 12 dazu eingerichtet sein, den aktuellen Fahrbetrieb des Kraftfahrzeugs 12 zu erfassen. Anschließend kann nach dem Erfassen des aktuellen Fahrbetriebs des Kraftfahrzeugs 12 die Steuereinrichtung 22 dazu eingerichtet sein, einer Kommunikationseinrichtung (in Fig. nicht gezeigt) des Kraftfahrzeugs 12 den aktuellen Fahrbetrieb des Kraftfahrzeugs12 zu melden. Daraufhin kann das Kraftfahrzeug 12, insbesondere die Kommunikationseinrichtung des Kraftfahrzeugs 12, eine Fahrbetriebsmeldung F an die Servereinrichtung 24 übermitteln. Ferner kann die Kommunikationseinrichtung des Kraftfahrzeugs 12 dazu eingerichtet sein, kontinuierlich, also in regelmäßigen zeitlichen Abständen, eine Fahrbetriebsmeldung F, insbesondere an die Servereinrichtung 24, auszugeben. Die Fahrbetriebsmeldung F enthält Informationen über den Fahrbetrieb des Kraftfahrzeugs 12. Bei dem Fahrbetrieb des Kraftfahrzeugs 12 kann es sich entweder um einen autonomen Fahrbetrieb, also vollautomatischen Fahrbetrieb, oder um einen nicht-autonomen Fahrbetrieb, also durch den Fahrer gesteuerten Fahrbetrieb des Kraftfahrzeugs 12 handeln.

Sobald durch die Servereinrichtung 24 ein nicht-autonomer Fahrbetrieb des Kraftfahrzeugs 12 erfasst wird, wird die mechanische Absperreinrichtung 20 zum Überfahren der Systemgrenze 14 geöffnet. Würde die Servereinrichtung 24 einen autonomen Fahrbetrieb des Kraftfahrzeugs 12, gemäß der Fahrbetriebsmeldung F, erfassen, so würde die mechanische Absperreinrichtung 20 nicht geöffnet werden.

Wird durch die Servereinrichtung 24 ein nicht-autonomer Fahrbetrieb des Kraftfahrzeugs 12 erfasst, so übermittelt die Servereinrichtung 24 eine Freigabemeldung FM an die mechanische Absperreinrichtung 20. Eine Steuereinrichtung (in Figur nicht gezeigt) der mechanischen Absperreinrichtung 20 kann dazu eingerichtet sein, die Freigabemeldung FM oder das Freigabesignal zu empfangen. Daraufhin kann die Steuereinrichtung der mechanischen Absperreinrichtung 20 dazu eingerichtet sein, einen Mechanismus zum Öffnen der mechanischen Absperreinrichtung 20 beispielsweise zum Hochfahren der Schranke des Parkhauses 16, anzusteuern.

Zum Öffnen der Schranke oder der mechanischen Absperreinrichtung 20 können noch weitere Sicherheitsschritte oder weitere Sicherheitsbedingungen zu erfüllen sein. So kann es vorgesehen sein, dass vor dem Öffnen der mechanischen Absperreinrichtung 20 durch die Servereinrichtung 24 eine erste Sicherheitsbedingung und/oder eine zweite Sicherheitsbedingung geprüft wird. Erst bei Erfüllen der ersten Sicherheitsbedingung und/oder der zweiten Sicherheitsbedingung wird die mechanische Absperreinrichtung 20 geöffnet. Gemäß einer Ausführungsform kann es vorgesehen sein, dass zumindest eine der zwei Sicherheitsbedingungen zum Öffnen der mechanischen Absperreinrichtung 20 zu erfüllen ist. Alternativ kann es gemäß einer weiteren Ausführungsform vorgesehen sein das beide Sicherheitsbedingungen nacheinander, das heißt zunächst die erste Sicherheitsbedingung und anschließend die zweite Sicherheitsbedingung, zu erfüllen sind.

Durch die erste Sicherheitsbedingung und/oder die zweite Sicherheitsbedingung ergibt sich ein mehrstufiges Sicherheitsverfahren zum Öffnen der mechanischen Absperreinrichtung 20.

Als erste Sicherheitsbedingung wird ein Fahrbereitschaftszustand des Kraftfahrzeugs erfasst. Dabei kann der Fahrbereitschaftszustand durch das Öffnen zumindest einer Tür des Kraftfahrzeugs 12 signalisiert werden. Beispielsweise kann als Tür die Fahrertür des Kraftfahrzeugs 12 und/oder die Beifahrertür des Kraftfahrzeugs zu und/oder eine Hintertür des Kraftfahrzeugs zu und/oder eine Heckklappe des Kraftfahrzeugs 12 zu geöffnet werden. Zusätzlich oder alternativ kann der Fahrbereitschaftszustand durch das Erfassen einer Annäherung eines Fahrers an das Kraftfahrzeug 12 signalisiert werden. Eine Annäherung des Fahrers oder einer Person an das Kraftfahrzeug 12 kann beispielsweise durch eine weitere Erfassungseinrichtung, wie beispielsweise ein Näherungssensor und/oder eine Kamera am Kraftfahrzeug 12, welche auf eine Umgebung des Kraftfahrzeugs 12 gerichtet ist, erfasst werden. Zusätzlich oder alternativ kann der Fahrbereitschaftszustand durch das Erfassen eines Funkschlüssels des Kraftfahrzeugs 12 in einem Innenraum des Kraftfahrzeugs 12 und/oder durch das Erfassen des Fahrers in dem Innenraum des Kraftfahrzeugs signalisiert werden. Beispielsweise kann der Fahrer und/oder der Funkschlüssel in dem Innenraum durch eine Kamera erfasst werden, welche insbesondere an einem Dachhimmel des Kraftfahrzeugs angeordnet ist, erfasst werden. Sobald das Öffnen zumindest einer Tür und/oder eine Annäherung an das Kraftfahrzeug 12 und/oder der Fahrer im Innenraum des Kraftfahrzeugs 12 und/oder der Funkschlüssel im Innenraum des Kraftfahrzeugs 12 erfasst wird, kann das Kraftfahrzeug 12 von den autonomen in den nicht-autonomen Fahrbetrieb überführt werden. Sobald das Öffnen zumindest einer Tür und/oder eine Annäherung an das Kraftfahrzeug 12 und/oder der Fahrer im Innenraum des Kraftfahrzeugs 12 und/oder der Funkschlüssel im Innenraum des Kraftfahrzeugs 12 erfasst wird, kann ein Fahrbereitschaftssignal an die Steuereinrichtung 22 des Kraftfahrzeugs 12 ausgegeben werden, welche daraufhin der Servereinrichtung 24 den Fahrbereitschaftszustand übermittelt. Daraufhin ist die Servereinrichtung 24 dazu eingerichtet, die Freigabemeldung FM an die mechanische Absperreinrichtung 20 auszugeben.

Als zweite Sicherheitsbedingung kann eine Bedienhandlung des Nutzers oder Fahrers an der mechanischen Absperreinrichtung 20 erfasst werden. Dabei kann die Bedienhandlung durch eine Betätigung einer Taste 26 an der mechanischen Absperreinrichtung 20 signalisiert werden. Beispielsweise kann der Fahrer als Taste 26 einen Druckknopf an der mechanischen Absperreinrichtung 20 betätigen. Zusätzlich oder alternativ kann die Bedienhandlung durch ein Einführen eines Freigabeelements in die mechanische Absperreinrichtung 20 signalisiert werden. Handelt es sich beispielsweise bei der mechanischen Absperreinrichtung um eine Schranke eines Parkhauses, so kann der Fahrer einen Parkschein als Freigabeelements der mechanischen Absperreinrichtung, insbesondere über eine Schnittstelle 28 der mechanischen Absperreinrichtung 20, der mechanischen Absperreinrichtung 20 zuführen. Zusätzlich oder alternativ kann die Bedienhandlung durch ein Eingeben eines Codes, insbesondere über eine Schnittstelle im Kraftfahrzeug, wie beispielsweise über ein HMI (englisch Human Machine Interface), signalisiert werden. Bei Erfassen der Bedienhandlung kann ein Bedienhandlungssignal der Servereinrichtung 24 von der mechanischen Absperreinrichtung 20, insbesondere von der Steuereinrichtung der mechanischen Absperreinrichtung 20, übermittelt werden. Daraufhin ist die Servereinrichtung dazu eingerichtet, die Freigabemeldung FM mechanische Absperreinrichtung 20 auszugeben.

Die Freigabemeldung FM und/oder die Fahrbetriebsmeldung F und/oder das Erfassungssignal können beispielsweise über eine Bluetooth-Verbindung oder eine Funkverbindung oder eine WLAN-Verbindung übertragen oder gesendet werden. Das Kraftfahrzeug 12 und/oder die Servereinrichtung 24 und/oder die Steuereinrichtung 22 kann über Bluetooth und/oder über ein drahtloses lokales Netzwerk, also wireless, mit der Servereinrichtung und/oder der mechanischen Absperreinrichtung 20 kommunizieren.

Insgesamt ist durch die Erfindung eine sichere Deaktivierung einer fahrerlosen Fahrfunktion für Parkhäuser beschrieben.

Die Verwendung von fahrerlosen, also autonomen, Fahrfunktionen wird in der frühen Phase vor allem an bestimmte Umgebungen gebunden sein. Dies liegt darin begründet, dass die Sicherheit nur in Kombination mit bestimmten Rahmenbedingungen gegeben ist. Würde das Kraftfahrzeug selbstständig in den öffentlichen Straßenverkehr eindringen, wäre es außerhalb der eigentlichen Systemgrenzen und damit eine Gefährdung für den öffentlichen Straßenverkehr. Eine Möglichkeit, wie das Kraftfahrzeug selbstständig in den Straßenverkehr eindringt ist, dass die Lokalisierung des Kraftfahrzeugs fehlerhaft arbeitet, sodass das Kraftfahrzeug einfach über die Übernahmezone, also die Abgabestelle, an dem das Kraftfahrzeug anhalten soll, um vom Fahrer entgegen genommen zu werden, hinausfahren würde.

Um dies sicherzustellen, dass das Kraftfahrzeug nicht selbstständig in den öffentlichen Straßenverkehr eindringt, werden mittels Sensorik des Kraftfahrzeugs Hindernisse während der fahrerlosen Fahrt erkannt, woraufhin das Kraftfahrzeug bremst. Daher ist eine Schranke zu installieren, die sensorisch durch das Kraftfahrzeug erkannt wird und auf die die Software des Kraftfahrzeugs bremst. Darüber hinaus deaktiviert sich die fahrerlose Funktion in dem Moment, in dem eine beliebige Tür des Kraftfahrzeugs geöffnet wird. Das Öffnen der beliebigen Tür des Kraftfahrzeugs wird an den Server oder die Servereinrichtung des Parkhauses gemeldet. Damit ist die Erste von zwei Sicherheitsbedingungen zum Öffnen der Schranke oder der mechanischen Absperreinrichtung erfüllt. Die zweite Bedingung kann erst nach Erfüllung der ersten Sicherheitsbedingung erfüllt werden, indem eine bestimmte Bedienhandlung durch einen Fahrer an der Schranke ausgeführt wird. Bei der vorbestimmten Bedienhandlung kann es sich beispielsweise um das Drücken eines Knopf und/oder das Einführen eines Parktickets und/oder das Eingeben eines Codes über HMI (Human Machine Interface) handeln. Nach Erfüllen der zweiten Sicherheitsbedingung öffnet die Schranke, weil sichergestellt werden kann, dass der Fahrer die Kontrolle über das Kraftfahrzeug zurückerlangt hat.

## Patentansprüche

1. Verfahren zum Betreiben eines Sicherheitssystems (10) für ein Kraftfahrzeug (12) zum Überfahren einer Systemgrenze (14), wobei sich das Kraftfahrzeug (12) innerhalb eines vorbestimmten Gebiets, welches durch die Systemgrenze (14) festgelegt ist, in einem autonomen Fahrbetrieb autonom von einer Abgabestelle zu einer vorbestimmten Position und anschließend von der vorbestimmten Position zurück zu der Abgabestelle bewegt, **gekennzeichnet durch** die Schritte zum Überfahren der Systemgrenze (14):
- Erfassen einer mechanischen Absperreinrichtung (20) des Sicherheitssystems (10) mittels einer Erfassungseinrichtung (18) des Kraftfahrzeugs (12), wobei die mechanische Absperreinrichtung (20) einen Teil der Systemgrenze (14) bildet;
- Nach Erfassen der mechanischen Absperreinrichtung (20) Erfassen eines aktuellen Fahrbetriebs des Kraftfahrzeugs (12);
- Ausgeben einer Fahrbetriebsmeldung (F) durch eine Kommunikationseinrichtung des Kraftfahrzeugs (12) zum Öffnen der mechanischen Absperreinrichtung (20), und
- Öffnen der mechanischen Absperreinrichtung, wenn sich gemäß der Fahrbetriebsmeldung (F) das Kraftfahrzeug in einem nicht-autonomen Fahrbetrieb befindet.

2. Verfahren nach Anspruch 1,
**dadurch gekennzeichnet, dass**
bei oder nach Erfassen der mechanischen Absperreinrichtung (20) das Kraftfahrzeug (12) zum Stillstand gebracht wird.

3. Verfahren nach Anspruch 1 oder 2,
**dadurch gekennzeichnet, dass**
vor dem Erfassen des Fahrbetriebs das Kraftfahrzeug (12) von dem autonomen Fahrbetrieb in den nicht-autonomen Fahrbetrieb überführt wird, wobei zum Erfassen des Fahrbetriebs bei Überführung des Fahrbetriebs des Kraftfahrzeugs (12) in den nicht-autonomen Fahrbetrieb die Fahrbetriebsmeldung (F) von dem Kraftfahrzeug (12) ausgegeben wird.

4. Verfahren nach einem der vorhergehenden Ansprüche,
**dadurch gekennzeichnet, dass**
vor dem Öffnen der mechanischen Absperreinrichtung (20) eine erste Sicherheitsbedingung und/oder eine zweite Sicherheitsbedingung durch das Sicherheitssystem (10) geprüft wird, wobei erst bei Erfüllen der ersten Sicherheitsbedingung und/oder der zweiten Sicherheitsbedingung die mechanische Absperreinrichtung (20) geöffnet wird.

5. Verfahren nach Anspruch 4,
**dadurch gekennzeichnet, dass**
als erste Sicherheitsbedingung ein Fahrbereitschaftszustand des Kraftfahrzeugs (12) erfasst wird, wobei der Fahrbereitschaftszustand durch das Öffnen zumindest einer Tür des Kraftfahrzeugs (12) und/oder durch das Erfassen einer Annäherung eines Fahrers an das Kraftfahrzeug (12) und/oder durch das Erfassen eines Funkschlüssels des Kraftfahrzeugs (12) in einem Innenraum des Kraftfahrzeugs (12) und/oder das Erfassen des Fahrers in dem Innenraum des Kraftfahrzeugs (12) signalisiert wird.

6. Verfahren nach Anspruch 4 oder 5,
**dadurch gekennzeichnet, dass**
als zweite Sicherheitsbedingung eine Bedienhandlung des Nutzers an der mechanischen Absperreinrichtung (20) erfasst wird, wobei die Bedienhandlung durch eine Betätigung einer Taste (26) und/oder durch ein Einführen eines Freigabeelements in die mechanische Absperreinrichtung (20) signalisiert wird.

7. Verfahren zum Betreiben einer Servereinrichtung (24) eines Sicherheitssystems (10) zum Öffnen einer mechanischen Absperreinrichtung (20) **gekennzeichnet durch** die Schritte:
- Empfangen einer Fahrbetriebsmeldung (F), wobei die Fahrbetriebsmeldung (F) einen aktuellen Fahrbetrieb des Kraftfahrzeugs (12) meldet;
- Auswerten der Fahrbetriebsmeldung (F) durch die Servereinrichtung (24),
- Ausgeben einer Freigabemeldung (FM) zum Öffnen der mechanischen Absperreinrichtung (20), wenn nach dem Auswerten der Fahrbetriebsmeldung (F) durch die Servereinrichtung (24) ein nicht-autonomer Fahrbetrieb des Kraftfahrzeugs (12) erfasst wird.

8. Sicherheitssystem (10) für ein Kraftfahrzeug (12) zum Überfahren einer Systemgrenze (14)
**gekennzeichnet durch**
- eine Erfassungseinrichtung (18) zum Erfassen einer mechanischen Absperreinrichtung (20) des Sicherheitssystems (10), wobei die mechanische Absperreinrichtung (20) einen Teil der Systemgrenze (14) eines vorbestimmten Gebiets bildet
- eine Kommunikationseinrichtung, welche dazu eingerichtet ist, eine Fahrbetriebsmeldung (F) zum Öffnen der mechanischen Absperreinrichtung (20) auszugeben, und
- eine Servereinrichtung (24), welche dazu eingerichtet ist, den Fahrbetrieb des Kraftfahrzeugs (12) zu erfassen und die mechanische Absperreinrichtung (20) durch Ansteuern zu öffnen, wenn ein nicht-autonomer Fahrbetrieb des Kraftfahrzeugs (12) erfasst wird.

9. Sicherheitssystem (10) nach Anspruch 8,
**dadurch gekennzeichnet, dass**
das vorbestimmte Gebiet durch ein Parkhaus (16) oder einen Parkplatz gebildet ist.

10. Sicherheitssystem (10) nach Anspruch 8 oder 9,
**dadurch gekennzeichnet, dass**
die mechanische Absperreinrichtung (20) eine Schranke und/oder ein Tor umfasst.

11. Sicherheitssystem (10) nach einem der Ansprüche 8 bis 10,
**dadurch gekennzeichnet, dass**
die Erfassungseinrichtung (18) einen Sensor, insbesondere einen Ultraschallsensor, und/oder einen Radar und/oder ein Lidar und/oder einen Laser umfasst.

## Claims

1. Method for operating a safety system (10) for a motor vehicle (12) for crossing a system boundary (14), wherein the motor vehicle (12) travels autonomously inside a predetermined area, which is defined by the system boundary (14), in an autonomous driving mode from a delivery point to a predetermined position and then from the predetermined position back to the delivery point, **characterised by** the steps for crossing the system boundary (14):
- detection of a mechanical blocking apparatus (20) of the safety system (10) by means of a detection apparatus (18) of the motor vehicle (12), wherein the mechanical blocking apparatus (20) forms a part of the system boundary (14);
- after detection of the mechanical blocking apparatus (20), detection of a current driving mode of the motor vehicle (12);
- outputting, using a communication apparatus of the motor vehicle (12), a driving mode message (F) for opening the mechanical blocking apparatus (20), and
- opening the mechanical blocking apparatus if, according to the driving mode message (F), the motor vehicle is in a non-autonomous driving mode.

2. Method according to claim 1,
**characterised in that**
the motor vehicle (12) is brought to a standstill when or after the mechanical blocking apparatus (20) is detected.

3. Method according to claim 1 or 2,
**characterised in that**,
before the driving mode is detected, the motor vehicle (12) is transferred from the autonomous driving mode to the non-autonomous driving mode, wherein, for the detection of the driving mode, when the driving mode of the motor vehicle (12) is transferred to the non-autonomous driving mode, the driving mode message (F) is output by the motor vehicle (12).

4. Method according to any of the preceding claims,
**characterised in that**,
before the mechanical blocking apparatus (20) is opened, a first safety condition and/or a second safety condition is checked by the safety system (10), wherein the mechanical blocking apparatus (20) is opened only when the first safety condition and/or the second safety condition is fulfilled.

5. Method according to claim 4,
**characterised in that**
a ready-to-drive state of the motor vehicle (12) is detected as the first safety condition, wherein the ready-to-drive state is signalled by the opening of at least one door of the motor vehicle (12) and/or by the detection of an approach of a driver to the motor vehicle (12) and/or by the detection of a radio key of the motor vehicle (12) in an interior of the motor vehicle (12) and/or the detection of the driver in the interior of the motor vehicle (12).

6. Method according to claim 4 or 5,
**characterised in that**
an operating action of the user at the mechanical blocking apparatus (20) is detected as the second safety condition, wherein the operating action is signalled by the pressing of a button (26) and/or by the insertion of a release element into the mechanical blocking apparatus (20).

7. Method for operating a server apparatus (24) of a safety system (10) for opening a mechanical blocking apparatus (20), **characterised by** the steps of:
- receiving a driving mode message (F), wherein the driving mode message (F) reports a current driving mode of the motor vehicle (12);
- evaluation of the driving mode message (F) by the server apparatus (24),
- outputting a release message (FM) for opening the mechanical blocking apparatus (20) if a non-autonomous driving mode of the motor vehicle (12) is detected after the evaluation of the driving mode message (F) by the server apparatus (24).

8. Safety system (10) for a motor vehicle (12) for crossing a system boundary (14), **characterised by**:
- a detection apparatus (18) for detecting a mechanical blocking apparatus (20) of the safety system (10), wherein the mechanical blocking apparatus (20) forms a part of the system boundary (14) of a predetermined area
- a communication apparatus configured to output a driving mode message (F) for opening the mechanical blocking apparatus (20), and
- a server apparatus (24) configured to detect the driving mode of the motor vehicle (12) and to open the mechanical blocking apparatus (20) by actuation if a non-autonomous driving mode of the motor vehicle (12) is detected.

9. Safety system (10) according to claim 8,
**characterised in that**
the predetermined area is formed by a multi-storey car park (16) or a parking area.

10. Safety system (10) according to claim 8 or 9,
**characterised in that**
the mechanical blocking apparatus (20) comprises a barrier and/or a gate.

11. Safety system (10) according to any of claims 8 to 10,
**characterised in that**
the detection apparatus (18) comprises a sensor, in particular an ultrasonic sensor, and/or a radar and/or a lidar and/or a laser.

## Revendications

1. Procédé de fonctionnement d'un système de sécurité (10) permettant à un véhicule automobile (12) de franchir une limite de système (14), dans lequel le véhicule automobile (12) se déplace à l'intérieur d'une zone prédéfinie déterminée par la limite de système (14), d'un point donné jusqu'à une position prédéfinie puis de la position prédéfinie jusqu'au point donné et de manière autonome dans un mode de conduite autonome, **caractérisé par** les étapes ci-dessous permettant de franchir la limite de système (14) et consistant à :
- détecter un dispositif mécanique d'arrêt (20) du système de sécurité (10) au moyen d'un dispositif de détection (18) du véhicule automobile (12), dans lequel le dispositif mécanique d'arrêt (20) constitue une partie de la limite de système (14) ;
- détecter un mode de conduite actuel du véhicule automobile (12) après la détection du dispositif mécanique d'arrêt (20) ;
- émettre une information de mode de conduite (F) grâce à un dispositif de communication du véhicule automobile (12) afin d'ouvrir le dispositif mécanique d'arrêt (20), et
- ouvrir le dispositif mécanique d'arrêt si, selon l'information de mode de conduite (F), le véhicule automobile se trouve dans un mode de conduite non autonome.

2. Procédé selon la revendication 1,
**caractérisé en ce que**
le véhicule automobile (12) est mis à l'arrêt pendant ou après la détection du dispositif mécanique d'arrêt (20).

3. Procédé selon la revendication 1 ou 2,
**caractérisé en ce que**
avant la détection du mode de conduite, le véhicule automobile (12) passe du mode de conduite autonome au mode de conduite non autonome, dans lequel l'information de mode de conduite (F) est émise par le véhicule automobile (12) afin de détecter le mode de conduite lors du passage du mode de conduite du véhicule automobile (12) au mode de conduite non autonome.

4. Procédé selon l'une quelconque des revendications précédentes,
**caractérisé en ce que**
avant l'ouverture du dispositif mécanique d'arrêt (20), une première condition de sécurité et/ou une seconde condition de sécurité est/sont vérifiée(s) par le système de sécurité (10), dans lequel le dispositif mécanique d'arrêt (20) n'est ouvert que lorsque la première condition de sécurité et/ou la seconde condition de sécurité est/sont remplie(s).

5. Procédé selon la revendication 4,
**caractérisé en ce que**
un état d'attente de conduite du véhicule automobile (12) est détecté en tant que première condition de sécurité, dans lequel l'état d'attente de conduite est indiqué par l'ouverture d'au moins une portière du véhicule automobile (12) et/ou grâce à la détection d'une approche d'un conducteur au niveau du véhicule automobile (12) et/ou grâce à la détection d'une clé à radiofréquence du véhicule automobile (12) dans un espace intérieur du véhicule automobile (12) et/ou grâce à la détection du conducteur dans l'espace intérieur du véhicule automobile (12).

6. Procédé selon la revendication 4 ou 5,
**caractérisé en ce que**
une action de l'utilisateur au niveau du dispositif mécanique d'arrêt (20) est détectée en tant que seconde condition de sécurité, dans lequel l'action est indiquée par l'actionnement d'un bouton (26) et/ou par l'insertion d'un élément de validation dans le dispositif mécanique d'arrêt (20).

7. Procédé de fonctionnement d'un dispositif serveur (24) d'un système de sécurité (10) afin d'ouvrir un dispositif mécanique d'arrêt (20), **caractérisé par** les étapes ci-dessous consistant à :
- recevoir une information de mode de conduite (F), dans lequel l'information de mode de conduite (F) indique un mode de conduite actuel du véhicule automobile (12) ;
- évaluer l'information de mode de conduite (F) grâce au dispositif serveur (24),
- émettre une information de validation (FM) afin d'ouvrir le dispositif mécanique d'arrêt (20) si, après l'évaluation de l'information de mode de conduite (F) par le dispositif serveur (24), un mode de conduite non autonome du véhicule automobile (12) est détecté.

8. Système de sécurité (10) permettant à un véhicule automobile (12) de franchir une limite de système (14),
**caractérisé par**
- un dispositif de détection (18) permettant de détecter un dispositif d'arrêt mécanique (20) du système de sécurité (10), dans lequel le dispositif d'arrêt mécanique (20) constitue une partie de la limite de système (14) d'une zone prédéfinie,
- un dispositif de communication conçu pour émettre une information de mode de conduite (F) afin d'ouvrir le dispositif mécanique d'arrêt (20), et
- un dispositif serveur (24) conçu pour détecter le mode de conduite du véhicule automobile (12) et pour ouvrir le dispositif mécanique d'arrêt (20) par activation si un mode de conduite non autonome du véhicule automobile (12) est détecté.

9. Système de sécurité (10) selon la revendication 8,
**caractérisé en ce que**
la zone prédéfinie est constituée d'un parking couvert (16) ou d'un parc de stationnement.

10. Système de sécurité (10) selon la revendication 8 ou 9,
**caractérisé en ce que**
le dispositif mécanique d'arrêt (20) comprend une barrière et/ou un portail.

11. Système de sécurité (10) selon l'une quelconque des revendications 8 à 10,
**caractérisé en ce que**
le dispositif de détection (18) comprend un capteur, en particulier un capteur à ultrasons, et/ou un radar et/ou un lidar et/ou un laser.
